# EUROPÄISCHE PATENTSCHRIFT

(11) **EP 2 619 031 B1**
(45) Veröffentlichungstag und Bekanntmachung des Hinweises auf die Patenterteilung: **25.06.2014**
(21) Anmeldenummer: 11752116.1
(22) Anmeldetag: 26.08.2011
(51) Int. Cl.: B60N 2/50, B60N 2/52

(54) **FAHRZEUGSITZ, INSBESONDERE NUTZFAHRZEUGSITZ**
VEHICLE SEAT, IN PARTICULAR COMMERCIAL VEHICLE SEAT
SIÈGE DE VÉHICULE, EN PARTICULIER SIÈGE DE VÉHICULE UTILITAIRE

(30) Priorität: 22.09.2010 DE 102010046799
(43) Veröffentlichungstag der Anmeldung: 31.07.2013
(73) Patentinhaber: Keiper GmbH & Co. KG, 67657 Kaiserslautern (DE)
(72) Erfinder: REICHEL, Uwe, 66879 Kottweiler-Schwanden (DE)
(74) Vertreter: Wilhelm, Wolfgang
(86) Internationale Anmeldenummer: PCT/EP2011/004303
(87) Internationale Veröffentlichungsnummer: WO 2012/038021

(56) Entgegenhaltungen:
- DE-A1- 3 333 604
- DE-C1- 4 335 199
- US-A1- 2009 050 220

## Beschreibung

Die Erfindung betrifft einen Fahrzeugsitz, insbesondere Nutzfahrzeugsitz, mit einem Scherengestell, welches schwingfähig und höheneinstellbar ist, mit einer Gasfeder und wenigstens einem Paar von Schwingen, welche sich an einer Scherenachse kreuzen, und einer Steuereinrichtung zur Niveauregulierung und zur Höheneinstellung des Scherengestells, welche ein Steuerelement, eine vom Steuerelement ansteuerbare Ventileinrichtung zur Ansteuerung der Gasfeder, ein relativ zum Steuerelement oder zur Ventileinrichtung bewegbares Schaltelement und ein Lager für das Schaltelement aufweist, wobei das Steuerelement und die Ventileinrichtung verschiedenen, relativ zu einander beweglichen Teilen des Scherengestells kinematisch zugeordnet sind.

Bekannte Fahrzeugsitze dieser Art sind beispielsweise in der DE 28 49 700 A1, der DE 33 33 604 A1, der DE 43 35 199 C1, der US 4,946,145 A oder der DE 10 2006 017 774 A1 beschrieben. Für die Niveauregulierung ist jeweils ein Regelkreis vorgesehen, welcher aus dem Scherengestell, der Gasfeder und der Steuereinrichtung samt Steuerelement, Ventileinrichtung und Schaltelement besteht. Das Steuerelement und die Ventileinrichtung sind an verschiedenen, relativ zueinander beweglichen Teile des Fahrzeugsitzes angeordnet. Weicht der Istwert der Höhe vom Sollwert ab, in der Regel aufgrund einer Auslenkung des Sitzgestells, wird die Gasfeder so angesteuert, dass sie der Auslenkung entgegenwirkt, und der Istwert wieder den Sollwert erreicht. Für die Höheneinstellung wird in Abhängigkeit der neu einzustellenden Höhe mittels des Schaltelements der Sollwert geändert, so dass die Niveauregulierung den aktuellen Istwert als Abweichung vom Sollwert behandelt und das Scherengestell in die gewünschte neue Höhe bringt. Bei der technischen Umsetzung zeigen die bekannten Fahrzeugsitze einen teilweise komplizierten Aufbau. Zudem wäre eine Erhöhung der Genauigkeit der Niveauregulierung und der Höheneinstellung wünschenswert.

Die US 2009/0050220 A1 offenbart einen Fahrzeugsitz der eingangs genannten Art, dessen Schaltelement zweiflügelig ausgebildet und in dem von der Scherenachse beabstandeten Lager gelagert ist. Das Lager ist in einem Haltblech vorgesehen, welches an der Ventileinrichtung befestigt ist. Das Steuerelement steht axial von einem Zahnsegment ab, welches - auf der Scherenachse sitzend - mittels eines gezahnten Stoppers drehbar ist.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die kinematische Zuordnung des Steuerelements zur ersten Schwinge mittels der Koppel und die Verbindung der Ventileinrichtung mit dem Schaltelement, dessen Lager mit der zweiten Schwinge verbunden ist, ermöglicht sowohl die Niveauregulierung mittels einer Relativbewegung von Schaltelement und festgehaltener Ventileinrichtung als auch eine Änderung des Sollwertes der Höhe durch Bewegen der Ventileinrichtung mittels des Schaltelements. Die Anordnung kann an einer bezüglich des vorhandenen Bauraums geeigneten Stelle beabstandet von der Scherenachse erfolgen.

Gegenüber anderen möglichen Zuordnungen zu Teilen des Scherengestells, beispielsweise zu den Rahmen, erhöht die erfindungsgemäße kinematische Zuordnung die erfassbare Auslenkung bei der Schwingung des Scherengestells und damit die Messgenauigkeit des Istwertes der Höhe, was letztendlich sowohl die Niveauregulierung als auch die Höheneinstellung verbessert. Dabei soll unter der kinematischen Zuordnung verstanden werden, dass die einander kinematisch zugeordneten Bauteile sich zusammen bewegen, also eine kinematische Einheit oder Baugruppe bilden, was durch feste Verbindungen oder kraftschlüssige Kopplungen erreicht werden kann.

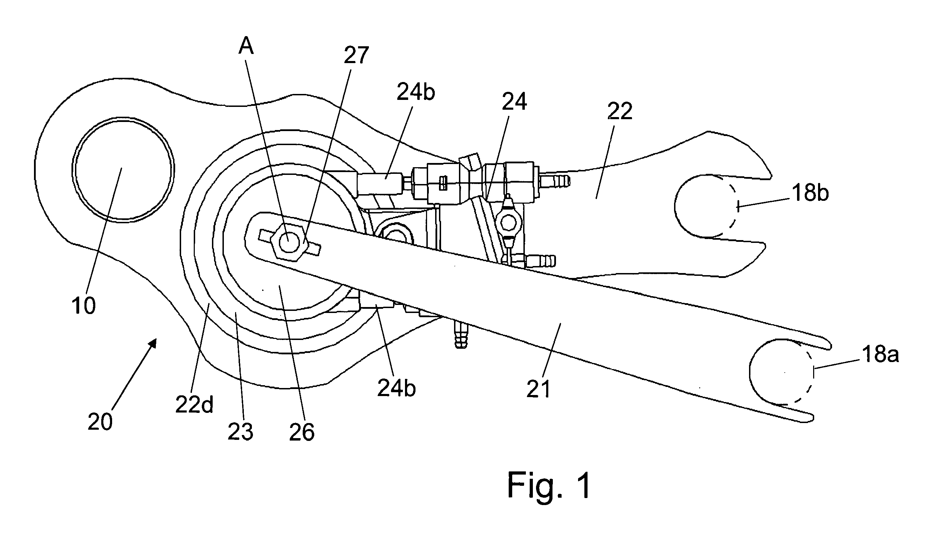

Im folgenden ist die Erfindung anhand eines in der Zeichnung dargestellten Ausführungsbeispiels und einer Abwandlung näher erläutert. Es zeigen
- Fig. 1: eine Seitenansicht einer Steuereinrichtung,

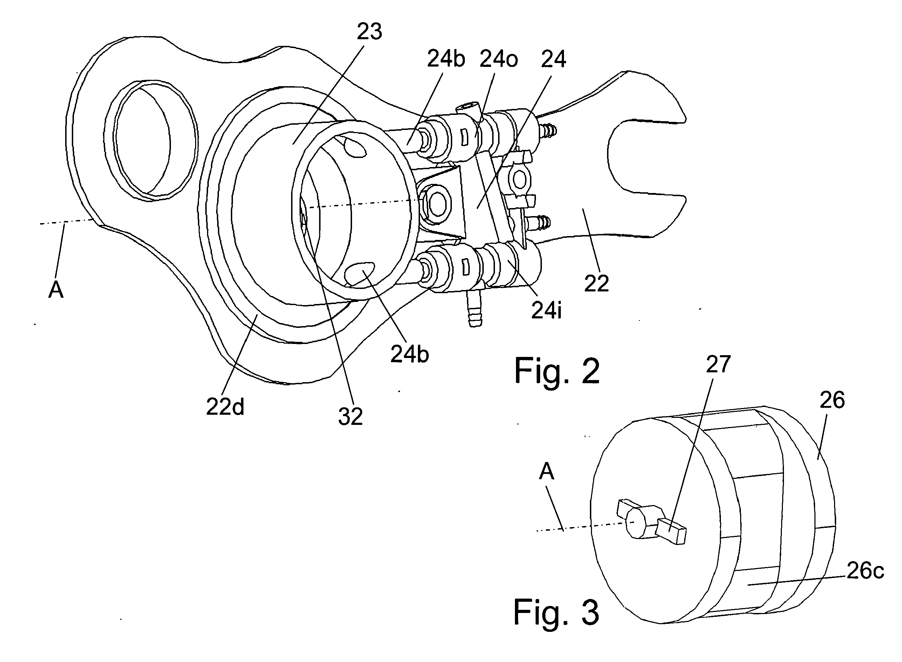

- Fig. 2: die Steuereinrichtung ohne Steuerelement,
- Fig. 3: das Steuerelement der Steuereinrichtung,

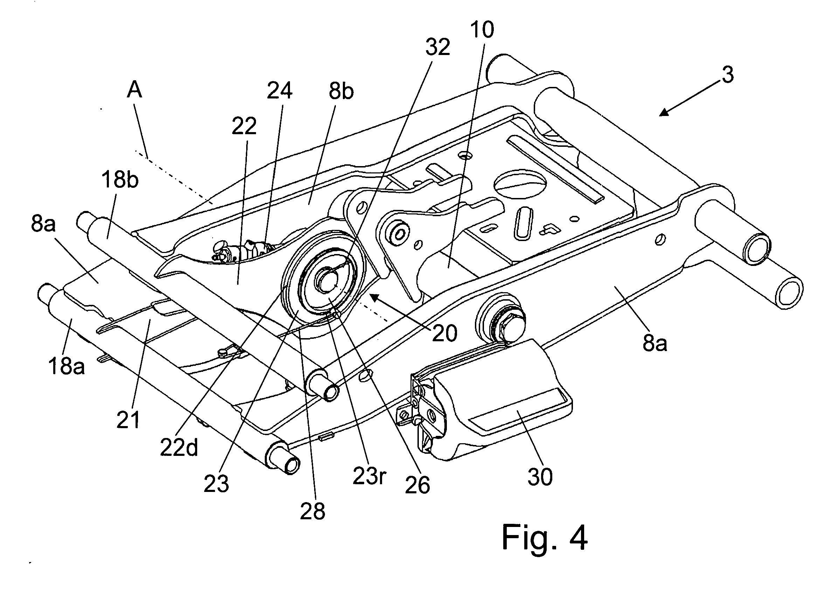

- Fig. 4: eine perspektivische Teilansicht des Scherengestells, und

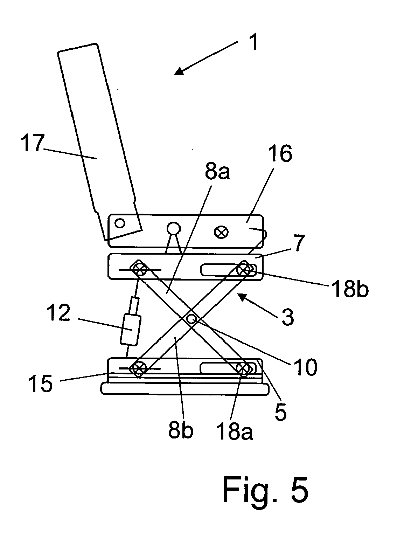

- Fig. 5: eine schematische Seitenansicht eines Fahrzeugsitzes.

Ein Fahrzeugsitz 1 für ein Nutzfahrzeug oder ein anderes Kraftfahrzeug weist ein Scherengestell 3 auf, welches einen Unterrahmen 5, einen oberhalb desselben angeordneten Oberrahmen 7 und beidseitig je ein Paar gekreuzter Schwingen 8a und 8b umfasst. Eine Scherenachse 10 verbindet die beiden Kreuzungspunkte und definiert zugleich die Achse, um welche die Schwingen 8a und 8b relativ zueinander schwenken können. Die Schwingen 8a und 8b sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung beweglich geführt sind. Durch diese Bewegung der Schwingen 8a und 8b ändert sich die Höhe des Oberrahmens 7 über dem Unterrahmen 5, im folgenden kurz als Höhe des Scherengestells 3 bezeichnet. Mittels einer Gasfeder 12 und vorzugsweise einem Dämpfer wird das Scherengestell 3 ein schwingfähiges System, welches den Sitzkomfort erhöht.

Das Scherengestell 3 ist vorliegend mittels Sitzschienen 15 in Sitzlängsrichtung verschiebbar, womit der Fahrzeugsitz 1 längseinstellbar ist, d.h. seine Sitzlängsposition einstellbar ist. Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Der Fahrzeugsitz 1 weist noch eine Lehne 17 auf, welche am Sitzrahmen 16 (oder alternativ am Oberrahmen 7) - vorliegend neigungseinstellbar - angebracht ist.

Die beiden Paare gekreuzter Schwingen 8a und 8b umfassen jeweils eine erste Schwinge 8a, welche außen angeordnet ist, und eine zweite Schwinge 8b, welche innen angeordnet ist. Die beiden ersten Schwingen 8a sind jeweils an ihren Enden miteinander mittels Querrohren verbunden. Die beiden zweiten Schwingen 8b sind ebenfalls jeweils an ihren Enden miteinander mittels Querrohren und mittig mittels der ebenfalls als Rohr ausgebildeten Scherenachse 10 verbunden. Die vorderen Querrohre lagern jeweils die Rollen. Ein Querrohr der ersten Schwingen, im Ausführungsbeispiel das vordere Querrohr, sei als erstes Querrohr 18a bezeichnet, während ein Querrohr der zweiten Schwingen 8b, im Ausführungsbeispiel das vordere Querrohr, als zweites Querrohr 18b bezeichnet sei.

Eine Steuereinrichtung 20 dient sowohl zur Niveauregulierung, d.h. einer Beibehaltung der eingestellten Höhe des Scherengestells 3 während des Fahrbetriebs, als auch zur Höheneinstellung des Scherengestells 3.

Die Steuereinrichtung 20 weist eine Koppel 21, welche kinematisch den ersten Schwingen 8a zugeordnet ist, und einen Träger 22 auf, welcher kinematisch den zweiten Schwingen 8b zugeordnet ist. Im Ausführungsbeispiel ist der Träger 22 an einem Ende an der Scherenachse 10 gelagert, wofür der Träger 22 ein Lagerauge aufweist, und am anderen Ende formschlüssig am zweiten Querrohr 18b befestigt, wofür der Träger 22 eine Lagergabel aufweist. Alternativ ist der Träger 22 an einem oder beiden Enden direkt an einer oder beiden zweiten Schwingen 8b befestigt.

Der Träger 22 weist im Abstand zur Scherenachse 10 ein Lager 22d in Form einer hohlzylindrischen Lagerbuchse auf, welches eine zur Scherenachse 10 parallele Achse A definiert. Das mit den zweiten Schwingen 8b verbundene Lager 22d steht von dem zwischen der Scherenachse 10 und dem zweiten Querrohr 18b verlaufenden, plattenförmigen Teil des Trägers 22 axial beidseitig ab. Im Lager 22d ist ein näherungsweise hohlzylindrisches Schaltelement 23 um die Achse A drehbar gelagert. Das Schaltelement 23 ragt (bezüglich der Achse A) axial beidseitig aus dem Lager 22d.

Mit dem Schaltelement 23 fest verbunden ist das Gehäuse einer Ventileinrichtung 24, welche bezüglich der Achse A radial vom Schaltelement 23 absteht. Die Ventileinrichtung 24 weist zwei Ventile zur Ansteuerung der Gasfeder 12 auf, nämlich ein Einlassventil 24i und ein Auslassventil 24o. Als Ventiltypen kommen sogenannte Sitzventile oder Schieberventile in Frage. Für jedes der beiden Ventile ragt ein beweglicher Stößel 24b aus dem Gehäuse der Ventileinrichtung 24. Durch Ansteuern (d.h. Beaufschlagen) des Stößels 24b ist das zugeordnete Ventil zu betätigen. Die Stößel 24b ragen durch entsprechende Öffnungen des Schaltelements 23 in das Innere des (hohlen) Schaltelements 23.

Im Inneren des Schaltelements 23 ist ein Steuerelement 26 drehbar gelagert, d.h. das Steuerelement 26, das Schaltelement 23 und das Lager 22d sind (bezüglich der Achse A) radial ineinander angeordnet. Das Steuerelement 26 weist eine Steuerkulisse 26c zum Zusammenwirken mit den Stößeln 24b der Ventileinrichtung 24 auf. Die Stößel 24b sind in einer Ausgangsstellung unbetätigt und werden bei einer Drehung des Steuerelementes 26 relativ zum Schaltelement 23 in Abhängigkeit vom Verlauf der Steuerkulisse 26c angesteuert. Das Steuerelement 26 ist an einer Stirnseite - mittels eines Wegausgleichsmittels 27 - drehfest mit einem Ende der Koppel 21 verbunden, während die Koppel 21 am anderen Ende formschlüssig am ersten Querrohr 18a befestigt ist, wofür die Koppel 21 eine Lagergabel aufweist. Da bei einer Relativdrehung der Schwingen 8a und 8b um die Scherenachse 10 die Koppel 21 zwar den ersten Schwingen 8a folgt, aber eine andere Bahn beschreibt (wegen des Abstandes der Achse A von der Scherenachse 10), dient das Wegausgleichsmittel 27, im vorliegenden Ausführungsbeispiel ein Schlitz in der Koppel 21 und ein länglicher Nocken am Steuerelement 26, dem Wegausgleich für die Koppel 21. Alternativ kann die Lagergabel am Ende der Koppel 21 als Wegausgleichsmittel dienen.

Die Steuereinrichtung 20 weist ferner ein als Bowdenzug ausgebildetes Seil 28 auf. Das Seil 28 ist an einem Ende mit einem Betätigungselement 30 für die Steuereinrichtung 20 verbunden, welches im Bereich des Sitzrahmens 16 oder des Oberrahmens 7 angeordnet ist. Am anderen Ende ist das Seil 28 am Schaltelement 23 befestigt und vorzugsweise teilweise um eine Seilrolle 23r des Schaltelements 23 gewickelt. Die Hülle des Seils 28 kann beispielsweise am Träger 22 oder am zweiten Querrohr 18b befestigt sein. Die Seilrolle 23r ist vorzugsweise auf der bezüglich der Ventileinrichtung 24 gegenüberliegenden Seite des Trägers 22 am Schaltelement 23 angeformt oder wenigstens drehfest mit diesem verbunden. Die Seilrolle 23r (und damit das Schaltelement 23) ist vorzugsweise mittels einer Rückstellfeder 32, beispielsweise einer Schenkelfeder, gegenüber dem Träger 22 oder dem Steuerelement 26 in eine Drehrichtung vorgespannt, in welcher das Seil 28 teilweise auf die Seilrolle 23r gewickelt wird. Dadurch wird das Schaltelement 30 relativ zum Träger 22 und damit zu den zweiten Schwingen 8b oder relativ zum Steuerelement 26 festgehalten.

Von den beiden Funktionen der Steuereinrichtung 20 wirkt die Niveauregulierung im Gebrauch des Fahrzeugsitzes 1 wie folgt: In einer Ausgangsstellung ist das Scherengestell 3 in einer bestimmten Höhe eingestellt, beispielsweise in einer oberen Position. Auslenkungen des schwingfähigen Scherengestells 3, beispielsweise aufgrund von Fahrbahnunebenheiten, führen dazu, dass die Schwingen 8a und 8b relativ zueinander schwenken. Da das Schaltelement 23 relativ zu den zweiten Schwingen 8b festgehalten wird und das Steuerelement 26 der Bewegung der ersten Schwingen 8a folgt, dreht das Steuerelement 26 sich relativ zum Schaltelement 23. Damit steuert - entsprechend der Richtung der Auslenkung des Scherengestells 3 und damit der Drehrichtung des Schaltelements 30 - die Steuerkulisse 26c einen der beiden Stößel 24b der Ventileinrichtung 24 an. Je nach Richtung der Auslenkung wird entweder mittels des Einlassventils 24i die Gasfeder 12 belüftet oder mittels des Auslassventils 24o die Gasfeder 12 entlüftet. Dies wirkt dann der Auslenkung entgegen. Die Schwingen 8a und 8b, die Steuereinrichtung 20 und die Gasfeder 12 bilden einen Regelkreis, welcher das Scherengestell 3 auf die eingestellte Höhe als Sollwert regelt.

Die andere Funktion der Steuereinrichtung 20, also die Höheneinstellung, wirkt wie folgt: In einer Ausgangsstellung ist das Scherengestell 3 in einer bestimmten Höhe eingestellt. Eine Betätigung des Betätigungselementes 30 der Steuereinrichtung 20 bewegt das Seil 28, d.h. am Seil 28 wird gezogen, so dass das Seil 28 teilweise von der Seilrolle 23r gewickelt wird, oder dem Seil 28 wird Weg freigeben, so dass die Rückstellfeder das Seil 28 teilweise auf die Seilrolle 23r wickelt. Das Seil 28 dreht dadurch das Schaltelement 23 (samt Ventileinrichtung 24) im Lager 22d, d.h. das Schaltelement 23 bewegt sich relativ (zum Lager 22d und) zum Steuerelement 26, womit die Stößel 24b sich entlang der Steuerkulisse 26c bewegen und einer der beiden Stößel 24b von die Steuerkulisse 26c angesteuert wird. Dies wirkt sich genauso aus, als ob die Schwingen 8a und 8b relativ zueinander schwenken würden, d.h. die Ventileinrichtung 24 wird betätigt, um der vermeintlichen Auslenkung entgegen zu wirken. Der Regelkreis regelt nun auf die neu eingestellte Höhe als Sollwert.

### Bezugszeichenliste

- 1: Fahrzeugsitz
- 3: Scherengestell
- 5: Unterrahmen
- 7: Oberrahmen
- 8a: erste Schwinge
- 8b: zweite Schwinge
- 10: Scherenachse
- 12: Gasfeder
- 15: Sitzschiene
- 16: Sitzrahmen
- 17: Lehne
- 18a: erstes Querrohr
- 18b: zweites Querrohr
- 20: Steuereinrichtung
- 21: Koppel
- 22: Träger
- 22d: Lager
- 23: Schaltelement
- 23r: Seilrolle
- 24: Ventileinrichtung
- 24b: Stößel
- 24i: Einlassventil
- 24o: Auslassventil
- 26: Steuerelement
- 26c: Steuerkulisse
- 27: Wegausgleichsmittel
- 28: Seil
- 30: Betätigungselement
- 32: Rückstellfeder
- A: Achse

## Patentansprüche

1. Fahrzeugsitz, insbesondere Nutzfahrzeugsitz, mit
a) einem Scherengestell (3), welches schwingfähig und höheneinstellbar ist, mit einer Gasfeder (12) und wenigstens einem Paar von Schwingen (8a, 8b), welche sich an einer Scherenachse (10) kreuzen, und
b) einer Steuereinrichtung (20) zur Niveauregulierung und zur Höheneinstellung des Scherengestells (3), welche ein Steuerelement (26), eine vom Steuerelement (26) ansteuerbare Ventileinrichtung (24) zur Ansteuerung der Gasfeder (12), ein relativ zum Steuerelement (26) oder zur Ventileinrichtung (24) bewegbares Schaltelement (23) und ein Lager (22d) für das Schaltelement (23) aufweist, wobei das Steuerelement (26) und die Ventileinrichtung (24) verschiedenen, relativ zu einander beweglichen Teilen des Scherengestells (3) kinematisch zugeordnet sind, wobei
c) das Steuerelement (26) mittels einer Koppel (21) an eine erste Schwinge (8a) des Paares von Schwingen (8a, 8b) gekoppelt ist, das Lager (22d) von der Scherenachse (10) beabstandet mit einer zweiten Schwinge (8b) des Paares von Schwingen (8a, 8b) verbunden ist, und die Ventileinrichtung (24) mit dem relativ zum Steuerelement (26) bewegbaren Schaltelement (23) verbunden ist, und wobei
d) das Steuerelement (26), das Schaltelement (23) und das Lager (22d) bezüglich einer Achse (A) radial ineinander angeordnet sind, wobei das Lager (22d) das Schaltelement (23) um die Achse (A) drehbar lagert und das Schaltelement (23) das Steuerelement (26) um die Achse (A) drehbar lagert.

2. Fahrzeugsitz nach Anspruch 1, **dadurch gekennzeichnet, dass** die Ventileinrichtung (24) Stößel (24b) aufweist, welche zum Zusammenwirken mit dem Steuerelement (26) in das Innere des Schaltelementes (23) ragen.

3. Fahrzeugsitz nach einem der vorhergehenden Ansprüche, **dadurch gekennzeichnet, dass** das Steuerelement (26) eine Steuerkulisse (26c) aufweist, welche bei einer Relativdrehung von Steuerelement (26) und Schaltelement (23) die Ventileinrichtung (24) ansteuert.

4. Fahrzeugsitz nach einem der vorhergehenden Ansprüche, **dadurch gekennzeichnet, dass** das Schaltelement (23) eine Seilrolle (23r) aufweist, auf welche ein Seil (28) teilweise wickelbar ist und welche insbesondere vorgespannt ist.

5. Fahrzeugsitz nach Anspruch 4, **dadurch gekennzeichnet, dass** das Schaltelement (23) bezüglich der Achse (A) axial beidseitig aus dem Lager (22d) ragt, wobei die Ventileinrichtung (24) auf der einen Seite und die Seilrolle (23r) auf der gegenüberliegenden Seite angeordnet ist.

6. Fahrzeugsitz nach Anspruch 4 oder 5, **dadurch gekennzeichnet, dass** die Steuereinrichtung (20) ein Betätigungselement (30) aufweist, dessen Betätigung das Seil (28) bewegt und damit das Schaltelement (23) dreht.

7. Fahrzeugsitz nach einem der vorhergehenden Ansprüche, **dadurch gekennzeichnet, dass** die Koppel einerseits mit der ersten Schwinge (8a) oder einem ersten Querrohr (18a) zwischen zwei fest miteinander verbundenen ersten Schwingen (8a) und andererseits mit dem Steuerelement (26) verbunden ist, wobei insbesondere ein Wegausgleichsmittel (27) vorgesehen ist.

8. Fahrzeugsitz nach einem der vorhergehenden Ansprüche, **dadurch gekennzeichnet, dass** die Steuereinrichtung (20) einen mit dem Lager (22d) versehenen Träger (22) aufweist, welcher einerseits mit der zweiten Schwinge (8b) und/oder einem Querrohr (18b) zwischen zwei fest miteinander verbundenen zweiten Schwingen (8b) und andererseits mit der Scherenachse (10) verbunden ist.

## Claims

1. Vehicle seat, in particular a utility vehicle seat, having
a) a scissor-type stand (3), which is able to vibrate and which can be adjusted in terms of height, with a pneumatic spring (12) and at least one pair of cranks (8a, 8b), which intersect at a scissor shaft (10), and
b) a control device (20) for level control and for height adjustment of the scissor-type stand (3), said control device being provided with a control element (26), a valve device (24) which can be controlled by the control element (26), for controlling the pneumatic spring (12), a switching element (23) which is movable relative to the control element (26) or to the valve device (24), and a bearing (22d) for the switching element (23), wherein the control element (26) and the valve device (24) are kinematically assigned to different parts of the scissor-type stand (3), such parts being movable relative to one another, wherein
c) the control element (26) is linked, by means of a connecting link (21), to a first crank (8a) of the pair of cranks (8a, 8b), the bearing (22d) is spaced apart from the scissor shaft (10) and connected with a second crank (8b) of the pair of cranks (8a, 8b), and the valve device (24) is connected with the switching element (23) which is movable relative to the control element (26), and wherein
d) the control element (26), the switching element (23) and the bearing (22d) are arranged radially one inside the other with respect to an axis (A), wherein the bearing (22d) rotatably supports the switching element (23) about the axis (A) and that the switching element (23) rotatably supports the control element (26) about the axis (A).

2. Vehicle seat according to Claim 1, **characterized in that** the valve device (24) is provided with tappets (24b) which, for cooperating with the control element (26) protrude in the interior of the switching element (23).

3. Vehicle seat according to one of the preceding claims, **characterized in that** the control element (26) is provided with a control slot (26c), which, in the event of a relative rotation of control element (26) and switching element (23), controls the valve device (24).

4. Vehicle seat according to one of the preceding claims, **characterized in that** the switching element (23) is provided with a cable roll (23r) onto which a cable (28) can be partially wound and which particularly is pretensioned.

5. Vehicle seat according to Claim 4, **characterized in that** the switching element (23), relative to the axis (A), axially protrudes on both sides from the bearing (22d), wherein the valve device (24) is arranged on the one side, and the cable roll (23r) is arranged on the opposite side.

6. Vehicle seat according to Claim 4 or 5, **characterized in that** the control device (20) is provided with an actuating element (30), the actuation of which moves the cable (28) and thus rotates the switching element (23).

7. Vehicle seat according to one of the preceding claims, **characterized in that** the connecting link is connected on the one hand with the first crank (8a) or with a first transverse pipe (18a) between two first cranks (8a) which are fixedly connected with each other and, on the other hand, with the control element (26), wherein particularly a stroke compensating means (27) is provided.

8. Vehicle seat according to one of the preceding claims, **characterized in that** the control device (20) has a base (22) which is provided with the bearing (22d), such base being connected on the one hand with the second crank (8b) and/or a transverse pipe (18b) between two second cranks (8b) which are fixedly connected with one another and, on the other hand, with the scissor shaft (10).

## Revendications

1. Siège de véhicule, en particulier siège de véhicule utilitaire, comprenant
a) un bâti en ciseaux (3), qui peut pivoter et être ajusté en hauteur, avec un ressort pneumatique (12) et au moins une paire de bras oscillants (8a, 8b), qui se croisent au niveau d'un axe de ciseaux (10), et
b) un dispositif de commande (20) pour la régulation de niveau et l'ajustement en hauteur du bâti en ciseaux (3), lequel présente un élément de commande (26), un dispositif de soupape (24) pouvant être commandé par l'élément de commande (26) pour commander le ressort pneumatique (12), un élément de commutation (23) déplaçable par rapport à l'élément de commande (26) ou par rapport au dispositif de soupape (24) et un palier (22d) pour l'élément de commutation (23), l'élément de commande (26) et le dispositif de soupape (24) étant associés de manière cinématique à différentes parties du bâti en ciseaux (3) déplaçables les unes par rapport aux autres,
c) l'élément de commande (26) étant accouplé au moyen d'une bielle (21) à un premier bras oscillant (8a) de la paire de bras oscillants (8a, 8b), le palier (22d) étant connecté de manière espacée de l'axe de ciseaux (10) à un deuxième bras oscillant (8b) de la paire de bras oscillants (8a, 8b), et le dispositif de soupape (24) étant connecté à l'élément de commutation (23) déplaçable par rapport à l'élément de commande (26), et
d) l'élément de commande (26), l'élément de commutation (23) et le palier (22d) étant disposés radialement les uns dans les autres par rapport à un axe (A), le palier (22d) supportant à rotation l'élément de commutation (23) autour de l'axe (A) et l'élément de commutation (23) supportant à rotation l'élément de commande (26) autour de l'axe (A).

2. Siège de véhicule selon la revendication 1, **caractérisé en ce que** le dispositif de soupape (24) présente des poussoirs (24b) qui pénètrent à l'intérieur de l'élément de commutation (23) afin de coopérer avec l'élément de commande (26).

3. Système de véhicule selon l'une quelconque des revendications précédentes, **caractérisé en ce que** l'élément de commande (26) présente une coulisse de commande (26c), laquelle, dans le cas d'une rotation relative de l'élément de commande (26) et de l'élément de commutation (23), commande le dispositif de soupape (24).

4. Siège de véhicule selon l'une quelconque des revendications précédentes, **caractérisé en ce que** l'élément de commutation (23) présente une poulie (23r), sur laquelle peut être enroulé en partie un câble (28) et qui est notamment précontrainte.

5. Siège de véhicule selon la revendication 4, **caractérisé en ce que** l'élément de commutation (23) fait saillie axialement des deux côtés hors du palier (22d) par rapport à l'axe (A), le dispositif de soupape (24) étant disposé d'un côté et la poulie (23r) étant disposée de l'autre côté.

6. Siège de véhicule selon la revendication 4 ou 5, **caractérisé en ce que** le dispositif de commande (20) présente un élément d'actionnement (30), dont l'actionnement déplace le câble (28) et fait ainsi tourner l'élément de commutation (23).

7. Siège de véhicule selon l'une quelconque des revendications précédentes, **caractérisé en ce que** la bielle est connectée d'une part au premier bras oscillant (8a) ou à un premier tube transversal (18a) entre deux premiers bras oscillants (8a) connectés fixement l'un à l'autre et d'autre part à l'élément de commande (26), un moyen de compensation de course (27) étant notamment prévu.

8. Siège de véhicule selon l'une quelconque des revendications précédentes, **caractérisé en ce que** le dispositif de commande (20) présente un support (22) pourvu du palier (22d), lequel est connecté d'une part au deuxième bras oscillant (8b) et/ou à un tube transversal (18b) entre deux deuxièmes bras oscillants (8b) connectés fixement l'un à l'autre et d'autre part à l'axe de ciseaux (10).
